# FASCICULE DE BREVET EUROPEEN

(11) **EP 2 684 238 B1**
(45) Date de publication et mention de la délivrance du brevet: **08.07.2015**
(21) Numéro de dépôt: 12707326.0
(22) Date de dépôt: 07.03.2012
(51) Int. Cl.: H01M 4/86, H01M 8/12, H01M 4/88, B28B 11/00, H01M 4/90

(54) **PROCEDE DE PREPARATION D'UNE ELECTRODE A AIR, LADITE ELECTRODE AINSI OBTENUE ET SES UTILISATIONS**
VERFAHREN ZUR HERSTELLUNG EINER LUFTELEKTRODE, ELEKTRODE UND IHRE VERWENDUNG
PROCESS FOR PRODUCING AN AIR ELECTRODE, THE ELECTRODE THUS OBTAINED AND ITS USES

(30) Priorité: 09.03.2011 FR 1151919
(43) Date de publication de la demande: 15.01.2014
(73) Titulaire: Commissariat à l'Énergie Atomique et aux Énergies Alternatives, 75015 Paris (FR)
(72) Inventeur: DELAHAYE, Thibaud, F-30330 Tresques (FR); PATRO, Pankaj-Kumar, Naupada Thane (West), Maharastra 400602 (IN)
(74) Mandataire: Ahner, Philippe
(86) Numéro de dépôt international: PCT/EP2012/053896
(87) Numéro de publication internationale: WO 2012/120033

(56) Documents cités:
- US-A1- 2006 280 998
- FERCHAUD C ET AL: "High performance praseodymium nickelate oxide cathode for low temperature solid oxide fuel cell", JOURNAL OF POWER SOURCES, ELSEVIER SA, CH, vol. 196, no. 4, 15 février 2011 (2011-02-15), pages 1872-1879, XP027531110, ISSN: 0378-7753 [extrait le 2010-09-22]
- G. TAILLADES ET AL: "Intermediate Temperature Anode-Supported Fuel Cell Based on BaCe 0.9 Y 0.1 O 3 Electrolyte with Novel Pr 2 NiO 4 Cathode", FUEL CELLS, 1 octobre 2009 (2009-10-01), pages NA-NA, XP055010672, ISSN: 1615-6846, DOI: 10.1002/fuce.200900033 cité dans la demande
- SHUNSUKE NISHIMOTO ET AL: "Properties of La2-xPrxNiO4 cathode for intermediate-temperature solid oxide fuel cells", JOURNAL OF THE CERAMIC SOCIETY OF JAPAN, vol. 119, no. 1387, 1 janvier 2011 (2011-01-01), pages 246-250, XP055010816, ISSN: 1882-0743, DOI: 10.2109/jcersj2.119.246
- HUANG X ET AL: "Preparation and characteristics of Pr1.6Sr0.4NiO4+YSZ as composite cathode of solid oxide fuel cells", JOURNAL OF PHYSICS AND CHEMISTRY OF SOLIDS, PERGAMON PRESS, LONDON, GB, vol. 70, no. 3-4, 1 mars 2009 (2009-03-01) , pages 665-668, XP026101816, ISSN: 0022-3697, DOI: 10.1016/J.JPCS.2009.02.004 [extrait le 2009-02-12]

## Description

### DOMAINE TECHNIQUE

La présente invention appartient au domaine des nouvelles technologies de l'énergie proposant des dispositifs et procédés pour promouvoir les énergies renouvelables et limiter les émissions de gaz à effet de serre.

Plus particulièrement, la présente invention appartient au domaine des cellules électrochimiques et notamment des piles à combustibles à oxyde solide (ou SOFC pour « Solid Oxide Fuel Cell », en langue anglaise) et des cellules d'électrolyse à oxyde solide (ou SOEC pour « Solid Oxide Electrolysis Cell », en langue anglaise).

En effet, la présente invention propose un procédé de préparation d'une électrode à air, également connue sous l'expression « électrode à oxygène », à base du composé oxyde qu'est le Pr₂NiO₄ ou un composé associé et présentant une microstructure optimisée permettant d'obtenir des performances électrochimiques élevées. La présente invention concerne également l'électrode à air ainsi obtenue et ses utilisations notamment dans les cellules électrochimiques.

### ÉTAT DE LA TECHNIQUE ANTÉRIEURE

De nombreux travaux portent sur l'amélioration des performances des cellules électrochimiques à oxyde solide réversibles (SOFC/SOEC) aux températures de fonctionnement et pour réduire ces températures de fonctionnement. En effet, il est actuellement recherché des moyens permettant de passer des températures de fonctionnement traditionnelles de 1000°C à des températures intermédiaires de l'ordre de 700 à 800°C. La diminution des températures de fonctionnement peut limiter voire supprimer la dégradation des composants des cellules électrochimiques et étendre la gamme des matériaux utilisables pour préparer de telles cellules. Cette diminution améliorera la durabilité des cellules et en réduira le coût.

Toutefois, réduire la température de fonctionnement diminue les vitesses/cinétiques des réactions électrochimiques et entraîne notamment une augmentation des résistances de polarisation des électrodes. Ainsi, un verrou majeur au développement de cellules électrochimiques fonctionnant à haute température et à température intermédiaire réside dans la résistance électrique totale de la cellule élémentaire cathode//électrolyte//anode et donc de chacun de ses éléments pris séparément.

Parmi ces constituants, se trouve l'électrode à air également connue sous l'appellation « électrode à oxygène ». Une telle électrode qui correspond à la cathode pour une SOFC et à l'anode pour une SOEC fait l'objet de nombreuses recherches. Afin d'abaisser sa résistance électrique totale, deux voies principales sont exploitables de manière séparée ou non :
- trouver de nouveaux matériaux meilleurs conducteurs ioniques et/ou électroniques (résistance intrinsèque faible) ;
- optimiser sa microstructure/architecture pour abaisser sa résistance extrinsèque.

Les matériaux qui ont fait l'objet de nombreuses études pour des applications dans les cellules électrochimiques sont les matériaux pérovskites de structure ABO₃ avec A représentant une terre rare et B un métal de transition. Dans ces matériaux, la terre rare avantageusement utilisée est, un lanthane qui peut être partiellement substitué par du strontium. Parmi de tels composés, on peut citer le LSM (ex. : La_{0.8}Sr_{0.2}MnO₃), le LSF (ex. : La_{0.5}Sr_{0.5}FeO₃) et le LSCF (ex. : La_{0.58}Sr_{0.4}Co_{0.2}Fe_{0.8}O₃).

En plus de ces matériaux, de nouveaux composés oxydes plus ou moins performants ont vu le jour tels que le BSCF (ex. : Ba_{0.5}Sr_{0.5}Co_{0.8}Fe_{0.2}O₃). le PSCF (ex. : Pr_{0.58}Sr_{0.4}Co_{0.2}Fe_{0.8}O3), le Nd₂NiO₄, le Nd_{1.95}NiO₄, le Nd_{1.97}NiO₄ ou encore le Pr₂NiO₄.

Les composés de formule Ln₂NiO_{4+y} avec Ln représentant un lanthanide et, en particulier, La, Nd et Pr permettent, grâce à leur structure chimique, une conduction ionique élevée en faisant des matériaux intéressants pour les électrodes à air. De plus, la mobilité de l'oxygène dans ces matériaux a été rapportée à une température aussi basse que 450°C [1]. Un autre avantage de ces matériaux réside dans la corrélation entre leur coefficient d'expansion thermique et celui des matériaux habituellement utilisés comme électrolytes tels qu'un électrolyte à base de zircone stabilisé à l'yttrium (ou YSZ pour « Yttrium Stabilized Zirconia ») ou un électrolyte à base de cérine dopée/substituée au gadolinium (ou GDC pour « Gadolinia Doped Ceria »).

Parmi ces composés, l'oxyde de nickel et de praséodyme (Pr₂NiO₄) semble, d'après la littérature, un matériau très prometteur, avec notamment une résistance de polarisation de 0,06 Ω.cm² à 800°C sous air [2]. Cette valeur est à comparer avec la valeur de 0,27 Ω.cm² obtenue avec le matériau classique LSM dans des conditions de mesure identiques [3].

Dans l'article de Taillades et *al.,* 2009 [4], une encre céramique comprenant du Pr₂NiO₄, de l'éthylcellulose et du terpinéol est déposée par sérigraphie sur la couche d'électrolyte à base de BaCe_{0.9}Y_{0.1}O_{3-δ} (BCY10) puis est frittée à une température de 1200°C pendant 1 h. Dans ces travaux, il est rapporté que le Pr₂NiO₄ présente une résistance de polarisation de l'ordre de 1 à 2 Ω.cm² à 600°C et de l'ordre de 0,1 à 0,2 Ω.cm² à 800°C sous air.

Cependant, même si le matériau Pr₂NiO₄ a été étudié par diverses équipes de façon plus ou moins approfondie, leurs travaux n'ont pas conduit à des résistances de polarisation en-dessous de ~0,045 Ω.cm² à 800°C sous air, valeur obtenue pour une électrode à base de Pr_{0.6}Sr_{0.4}Co_{0.8}Fe_{0.2}O₃ [5].

Les avantages d'une électrode à air à base de Pr₂NiO₄ pourront encore être accrus en abaissant sa résistance électrique totale et notamment sa résitance de polarisation. Il existe donc un réel besoin pour une électrode à base de Pr₂NiO₄ présentant des propriétés améliorées en termes de résistance électrique totale. Les inventeurs se sont fixés pour but de mettre au point un procédé de mise en forme d'une électrode à air à base de Pr₂NiO₄ permettant d'aboutir à une microstructure optimisée en termes d'abaissement de la résistance de polarisation tout en maintenant une cohésion mécanique de l'électrode.

Le document XP02753110 divulgue un procédé de préparation d'une électrode à air à base de Pr₂NiO₄, comprenant une étape consistant à soumettre une encre céramique comprenant du Pr₂NiO₄ sous forme de particules ayant un diamètre médian de 0.4 µm, à un frittage à une température de 1100 °C.

### EXPOSÉ DE L'INVENTION

La présente invention permet de résoudre les problèmes techniques tels que précédemment définis et d'atteindre le but que se sont fixés les inventeurs.

En effet, les travaux des inventeurs ont permis de mettre au point un procédé de préparation d'une électrode à air à base de Pr₂NiO₄ ou d'un composé associé avec une résistance de polarisation inférieure à 0,06 Ω.cm² et notamment inférieure à 0,045 Ω.cm² à 800°C sous air.

Une telle amélioration a été obtenue en procédant à un frittage partiel d'une encre céramique contenant non seulement du Pr₂NiO₄ ou un composé associé mais aussi un porogène. La température de frittage a été déterminée de façon à ce que le matériau obtenu conserve des propriétés électrocatalytiques et une porosité, en particulier une porosité ouverte, suffisantes, qu'il ait une bonne conduction électrique et que, lorsque inclus dans une cellule électrochimique, il présente une bonne adhésion sur la couche adjacente telle que la couche d'électrolyte ou une couche barrière. En outre, la cellule électrochimique doit être mécaniquement suffisamment résistante. Enfin, l'étape de frittage ne doit pas affecter l'homogénéité microstructurale du matériau obtenu tant en termes de porosité que de taille de particules.

Ainsi, la présente invention concerne un procédé de préparation d'une électrode à air à base de Pr₂₋ₓNiO₄ avec 0 ≤ x < 2, comprenant une étape consistant à soumettre une encre céramique comprenant du Pr₂₋ₓNiO₄ et un porogène, à un frittage à une température supérieure à 1000°C et inférieure ou égale à 1150°C.

Comme précédemment justifié, le matériau de base de l'électrode à air préparée selon l'invention correspond à de l'oxyde de nickel et de praséodyme (cas où x = 0) ou à un composé associé i.e. de formule apparentée sous stoechiométrique en praséodyme. Ces composés associés répondent à la formule Pr₂₋ₓNiO₄ avec 0 < x < 2, notamment 0 < x ≤ 1 et avantageusement 0 < x ≤ 0,5.

Le composé Pr₂₋ₓNiO₄ avec x tel que précédemment défini peut être un composé commercial ou un composé préparé à partir de précurseurs commerciaux tels que du Pr₆O₁₁ et du nickel. L'homme du métier connaît différents protocoles permettant de préparer, à partir de tels précurseurs, un composé Pr₂₋ₓNiO₄ avec x tel que précédemment défini. Un exemple particulier d'un tel protocole est la synthèse par voie humide citrate-nitrate. Que le composé Pr₂₋ₓNiO₄ soit un composé commercial ou qu'il soit préparé préalablement à la mise en oeuvre du procédé selon l'invention, il peut être soumis à une étape de calcination de façon à éliminer les constituants organiques qui ont pu participer à la préparation de ce composé. Avantageusement, cette étape préalable de calcination est mise en oeuvre à une température comprise entre 500 et 800°C, notamment entre 600 et 700°C et, en particulier, de l'ordre de 650°C (i.e. 650°C ± 20°C) et ce, pendant une durée comprise entre 15 min et 3 h, notamment entre 30 min et 2 h et, en particulier de l'ordre de 1 h (i.e. 1 h ± 15 min).

Le Pr₂₋ₓNiO₄ avec x tel que précédemment défini se présente sous forme d'une poudre. La poudre mise en oeuvre présente une surface spécifique, déterminée par la méthode BET (pour « Brunauer, Emett et Teller ») en utilisant le « Coulter Surface Area Analyser » de Beckman, comprise entre 1 et 15 m²/g et notamment entre 2 et 10 m²/g. Les particules constituant cette poudre ont notamment un diamètre médian (d50), déterminé en utilisant l'analyseur de taille de particules de Malvern, compris entre 0,1 et 1 µm et, en particulier, entre 0,2 et 0,7 µm. A titre d'exemple et de façon non exhaustive, le Pr₂NiO₄ utilisé dans la partie expérimentale ci-après se trouve sous la forme de particules dont le diamètre médian (d50) déterminé en utilisant l'analyseur de taille de particules de Malvern est d'environ 0,46 µm, ce qui signifie que la moitié des particules de la poudre de Pr₂NiO₄ utilisée présentent un diamètre inférieur à 0,46 µm.

De plus, les particules constituant la poudre de Pr₂₋ₓNiO₄ présentent un diamètre d90, déterminé en utilisant l'analyseur de taille de particules de Malvern, compris entre 0,5 et 2 µm et, en particulier, entre 0,7 et 1,5 µm. A titre d'exemple et de façon non exhaustive, le Pr₂NiO₄ utilisé dans la partie expérimentale ci-après se trouve sous la forme de particules dont le diamètre d90 déterminé en utilisant l'analyseur de taille de particules de Malvern est d'environ 0,97 µm, ce qui signifie que 90% des particules de la poudre de Pr₂NiO₄ utilisée présentent un diamètre inférieur à 0,97 µm.

La quantité de Pr₂₋ₓNiO₄ avec x tel que précédemment défini et notamment de poudre de Pr₂₋ₓNiO₄ avec x tel que précédemment défini, exprimée en masse par rapport à la masse totale de ladite encre est comprise entre 30 et 70%, notamment entre 40 et 60% et avantageusement de l'ordre de 48% (i.e. 48% ± 5%).

L'agent porogène également contenu dans l'encre céramique mise en oeuvre dans le procédé selon l'invention participe à la porosité finale du matériau constituant l'électrode à air préparée selon le procédé de l'invention. En particulier, l'agent porogène permet de créer une porosité ouverte. Par « porosité ouverte », on entend que les pores créés dans le matériau sont communicants. Cet agent porogène est éliminé lors de l'étape de frittage du procédé selon l'invention.

Avantageusement, l'agent porogène utilisé dans la présente invention se présente sous forme d'une poudre. Les particules constituant cette poudre ont notamment un diamètre médian (d50), déterminé en utilisant l'analyseur de taille de particules de Malvern, inférieur à 4 µm, avantageusement inférieur à 2 µm, notamment compris entre 20 et 400 nm et, en particulier, entre 30 et 200 nm. A titre d'exemple et de façon non exhaustive, le noir d'acétylène utilisé dans la partie expérimentale ci-après se trouve sous la forme de particules dont le diamètre médian (d50) est d'environ 40 nm, ce qui signifie que la moitié des particules de la poudre de noir d'acétylène utilisée présente un diamètre inférieur à 40 nm.

De plus, la poudre d'agent porogène mise en oeuvre présente une surface spécifique, déterminée par la méthode BET (pour « Brunauer, Emett et Teller ») en utilisant le « Coulter Surface Area Analyser » de Beckman, comprise entre 30 et 150 m²/g et notamment entre 40 et 100 m²/g.

L'agent porogène peut être tout agent porogène connu de l'homme du métier. Avantageusement, cet agent porogène est un composé naturel ou non, pulvérulent, choisi parmi le noir d'acétylène, le polystyrène, un polyméthacrylate de méthyle (PMMA), l'amidon, un polyéthylène, une cyclodextrine, une cire, un monosaccharide, un oligosaccharide tel que le saccharose et un polysaccharide. Plus particulièrement, l'agent porogène mis en oeuvre est du noir d'acétylène.

Le rapport massique Mp/(Mc + Mp) avec Mp représentant la masse d'agent porogène et Mc la masse de Pr₂₋ₓNiO₄ avec x tel que précédemment défini est compris entre 1,5 et 10%, notamment entre 2 et 7,5% et, en particulier, entre 2,5 et 5%.

L'encre céramique est également désignée sous le terme de « barbotine ».

L'encre céramique comprenant du Pr₂₋ₓNiO₄ avec x tel que précédemment défini et un agent porogène, telle que mise en oeuvre dans le cadre du procédé selon l'invention, est une dispersion (ou suspension) de poudres de Pr₂₋ₓNiO₄ et d'agent porogène dans un solvant aqueux ou organique.

Toute composition d'encre céramique connue de l'homme du métier est utilisable dans la préparation de l'encre céramique comprenant du Pr₂₋ₓNiO₄ et un agent porogène mise en oeuvre dans le cadre de la présente invention.

Ainsi, ladite encre céramique comprend au moins un élément choisi parmi un solvant, un dispersant, un liant et un plastifiant.

Dans le cadre de la présente invention, le solvant est le véhicule de la dispersion de poudres de Pr₂₋ₓNiO₄ et d'agent porogène. Il peut s'agir d'un solvant organique, d'un mélange de solvants organiques, d'eau ou d'un mélange d'eau et de solvant(s) organique(s). Par « solvant organique », on entend, dans le cadre de la présente invention, un solvant qui appartient à la famille des cétones, des éthers-oxydes, des esters, des alcools, des hydrocarbures notamment aromatiques ou des terpènes. A titre de solvants organiques utilisables dans le cadre de la présente invention, on peut citer la méthyléthylcétone (MEK pour « Methyl Ethyl Ketone » en anglais), l'acétate de butyle, l'éthylglycol, l'éthanol, le toluène, le cyclohexanone, l'acétate de butylcarbitol, le terpinéol et leurs mélanges comme un mélange azéotropique de MEK et d'éthanol. Le solvant organique plus particulièrement utilisé dans le cadre de la présente invention est le terpinéol.

Un dispersant peut être utilisé dans la composition d'encre céramique pour améliorer la stabilité de la suspension, pour éviter l'agglomération des poudres contenues dans cette suspension, et, par conséquent, pour obtenir une couche homogène. Tout dispersant connu de l'homme du métier est utilisable dans la composition d'encre céramique mise en oeuvre dans la présente invention. Les dispersants avantageusement utilisables sont choisis parmi l'acide oléique, le phosphate ester, le polyvinyle butyràle et leurs mélanges.

Dans la composition d'encre céramique, le liant sert à améliorer la cohérence de cette dernière une fois déposée et à en augmenter la densité en créant des ponts organiques entre les particules la constituant (poudre de Pr₂₋ₓNiO₄ et d'agents porogènes). Tout liant connu de l'homme du métier est utilisable dans la composition d'encre céramique mise en oeuvre dans la présente invention. Les liants avantageusement utilisables sont choisis parmi le carbonate de polypropylène, le polyvinyle butyrale, le polyisobutyle méthacrylate, l'éthylcellulose et leurs mélanges. Le liant plus particulièrement utilisé dans le cadre de la présente invention est l'éthylcellulose.

En outre, la composition d'encre céramique peut comprendre un plastifiant dont le rôle consiste à améliorer la flexibilité de cette dernière une fois déposée et donc son étalement sur le substrat. Tout plastifiant connu de l'homme du métier est utilisable dans la composition d'encre céramique mise en oeuvre dans la présente invention. Les plastifiants avantageusement utilisables sont choisis parmi les glycols tels que le polyéthylène glycol et les phtalates tels que le butylbenzyl phtalate et le dibutyl phtalate.

Avantageusement, l'encre céramique mise en oeuvre dans le cadre de la présente invention comprend au moins un solvant et au moins un liant. En particulier, cette encre comprend du terpinéol et de l'éthylcellulose. Le rapport massique Ml/(Ml + Ms) avec Ms représentant la masse de solvant et typiquement la masse de terpinéol, et Ml la masse de liant et typiquement la masse d'éthylcellulose est compris entre 1 et 10%, notamment entre 2 et 8% et, en particulier, entre 4 et 6%.

L'encre céramique contenant du Pr₂₋ₓNiO₄ avec x tel que précédemment défini et un agent porogène est préparée en mélangeant la poudre de Pr₂₋ₓNiO₄ avec x tel que précédemment défini et l'agent porogène, puis en incorporant ce 1^{er} mélange (ci-après désigné mélange 1) avec le solvant préalablement mélangé avec au moins un élément choisi parmi un solvant, un dispersant, un liant et un plastifiant (ci-après désigné mélange 2). Le rapport M1 / (M1 + M2) avec M1 représentant la masse du mélange 1 et M2 la masse du mélange 2 est compris entre 30 et 70%, notamment entre 40 et 60% et, en particulier, de l'ordre de 50% (i.e. 50% ± 5%).

Une fois, le mélange des différents constituants de l'encre céramique réalisé et homogénéisé, cette dernière peut être soumise à une désaération.

Dans le cadre du procédé selon l'invention, l'étape de frittage de l'encre céramique contenant de la poudre de Pr₂₋ₓNiO₄ avec x tel que précédemment défini et d'agent porogène est mise en oeuvre à une température supérieure à 1000°C et inférieure ou égale à 1150°C. Cette température est avantageusement comprise entre 1050 et 1150°C. Plus particulièrement encore, la température de frittage mise en oeuvre est 1100°C.

L'encre céramique contenant de la poudre de Pr₂₋ₓNiO₄ avec x tel que précédemment défini et d'agent porogène est soumise à la température de frittage pré-définie pendant une durée comprise entre 1 et 5 h et notamment entre 2 et 4 h. Avantageusement, cette durée est de l'ordre de 3 h (i.e. 3 h ± 15 min).

Préalablement à l'étape de frittage, l'encre céramique, déposée sous forme d'électrode, contenant le Pr₂₋ₓNiO₄ et l'agent porogène peut être soumise à un séchage. Elle est séchée typiquement à une température comprise entre 20°C à 200°C, notamment comprise entre 80°C à 120°C et, en particulier, à une température de l'ordre de 100°C (100°C ± 10°C) et ce, pendant une durée comprise entre 3 et 45 min, notamment comprise entre 5 et 30 min et, en particulier, pendant 15 min.

Préalablement à l'étape de frittage, l'encre céramique éventuellement séchée se trouve à une température comprise entre 10 et 40°C, notamment entre 18 et 30°C et avantageusement à température ambiante. Par « température ambiante », on entend, dans le cadre de la présente invention, une température de 23 C ± 3°C. L'encre céramique est portée à la température de frittage au moyen d'une rampe de montée en température comprise entre 50 et 400°C/h, notamment entre 100 et 200°C/h et, en particulier, de l'ordre de 150°C/h (i.e. 150°C/h ± 25°C/h).

De même, suite à l'étape de frittage, la couche obtenue à partir de l'encre céramique est ramenée à une température comprise entre 10 et 40°C, notamment entre 18 et 30°C et avantageusement à température ambiante. La couche est portée de la température de frittage à cette température au moyen d'une rampe de refroidissement comprise entre 50 et 400°C/h, notamment entre 100 et 200°C/h et, en particulier, de l'ordre de 150°C/h (i.e. 150°C/h ± 25°C/h).

L'étape de frittage et les étapes de montée en température et de refroidissement peuvent être mises en oeuvre dans un four programmable tel qu'un four continu à dalles glissantes, un four à rouleaux, un four tunnel à wagonnets, un four statique, un four à chambres ou un four cloche. La taille du four sera choisie pour être adaptée à la taille de l'électrode à air à préparer.

L'étape de frittage et les étapes de montée en température et de refroidissement sont avantageusement réalisées sous air.

La présente invention concerne également l'électrode à air susceptible d'être préparée par le procédé de l'invention tel que précédemment défini. En d'autres termes, la présente invention concerne une électrode à air à base de Pr₂₋ₓNiO₄ avec 0 ≤ x < 2, obtenue par frittage d'une encre céramique comprenant du Pr₂₋ₓNiO₄ et un porogène. Cette électrode à air se distingue des électrodes à air de l'état de la technique à base de Pr₂₋ₓNiO₄ avec x tel que précédemment défini de par le fait qu'elle présente une résistance de polarisation inférieure à 0,06 Ω.cm² à 800°C sous air, notamment inférieure à 0,045 Ω.cm² à 800°C sous air et, en particulier, inférieure à 0,02 Ω.cm² à 800°C sous air. La résistance de polarisation est déterminée par spectrométrie d'impédance complexe à 800°C sous air.

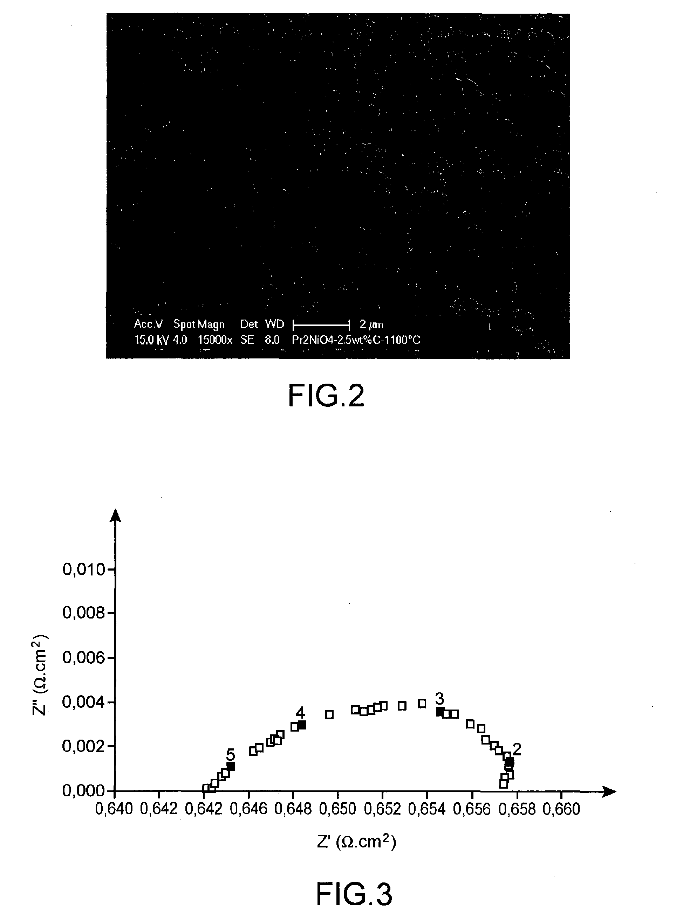

Cette électrode à air se caractérise également par une homogénéité microstructurale remarquable tant au niveau de la porosité qu'au niveau de la taille des particules la constituant, comme exemplifié ci-après et à la Figure 2.

L'électrode à air à base de Pr₂₋ₓNiO₄ avec x tel que précédemment défini et susceptible d'être préparée par le procédé de l'invention tel que précédemment défini présente une structure poreuse. Les pores de cette électrode peuvent être reliés ou isolés. Toutefois, la majorité des pores sont reliés, en communication entre eux mais aussi en communication avec l'environnement de l'électrode à air. On parle alors de porosité ouverte. La porosité ouverte de l'électrode à air selon l'invention est comprise entre 30 et 70%, notamment entre 40 et 60% et, en particulier, de l'ordre de 50% (i.e. 50% ± 5%), le pourcentage étant exprimé en volume par rapport au volume total de l'électrode à air.

La présente invention concerne également une (demi-)cellule électrochimique comprenant une électrode à air telle que précédemment définie ou susceptible d'être préparée selon un procédé de préparation tel que précédemment défini.

Pour rappel, une cellule électrochimique correspond à l'association d'au moins deux électrodes et d'au moins un électrolyte et notamment comprend deux électrodes et un électrolyte. De fait, une demi-cellule électrochimique correspond à l'association d'au moins une électrode et d'au moins un électrolyte et notamment comprend une électrode et un électrolyte. Les différents éléments constituant la (demi-)cellule électrochimique se présentant sous forme de couches sensiblement parallèles, appliquées les unes sur les autres.

Dans une demi-cellule électrochimique, l'électrode à air selon l'invention correspond non seulement à la couche fonctionnelle où les réactions électrochimiques ont lieu mais aussi à la couche collectrice du courant. Dans la demi-cellule électrochimique selon l'invention, ladite électrode à air présente une épaisseur comprise entre 4 et 16 µm, notamment entre 6 et 12 µm et, en particulier, de l'ordre de 8 µm (i.e. 8 µm ± 1 µm).

Une demi-cellule électrochimique selon l'invention comprend une électrode à air selon l'invention et un électrolyte qui peut éventuellement être séparé de ladite électrode à air au moyen d'une (ou de plusieurs) couche(s) barrière(s) empêchant toute réactivité entre le matériau constituant l'électrolyte et le matériau de l'électrode à air selon l'invention i.e. le Pr₂₋ₓNiO₄ avec x tel que précédemment défini. Dans une forme de mise en oeuvre particulière, la demi-cellule électrochimique selon l'invention comprend un électrolyte, une couche barrière et une électrode à air selon l'invention.

Tout matériau habituellement utilisé comme électrolyte est utilisable dans le cadre de l'invention.

Avantageusement, compte tenu du coefficient d'expansion thermique du matériau à base de Pr₂₋ₓNiO₄ avec x tel que précédemment défini, l'électrolyte mis en oeuvre est choisi parmi un électrolyte à base de zircone stabilisée et notamment à base de zircone stabilisée à l'yttrium (ou YSZ pour « Yttrium Stabilized Zirconia ») ou un électrolyte à base de cérine substituée (ou dopée) et notamment à base de cérine substituée (ou dopée) au gadolinium (ou GDC pour « Gadolinia Doped Ceria »). En particulier, l'électrolyte mis en oeuvre est un électrolyte à base de zircone stabilisée à l'yttrium (YSZ).

Quel que soit l'électrolyte mis en oeuvre, il se présente typiquement sous forme d'une couche dense, c'est-à-dire une couche dont la porosité totale est inférieure à 15% et notamment inférieure à 10%, pourcentage exprimé en volume par rapport au volume total de la couche d'électrolyte.

La couche barrière telle que mise en oeuvre dans la demi-cellule électrochimique selon l'invention est une couche poreuse dont la porosité ouverte est comprise entre 10 et 60%, notamment entre 20 et 50% et, en particulier, de l'ordre de 30% (i.e. 30% ± 5%), le pourcentage étant exprimé en volume par rapport au volume total de la couche barrière.

Avantageusement, la couche barrière poreuse peut être en zircone stabilisée et/ou en cérine substituée. Plus particulièrement, cette couche barrière est en GDC ou en cérine substituée (ou dopée) à l'yttrium (ou YDC pour « Yttria Doped Ceria »).

Dans la demi-cellule électrochimique selon l'invention, ladite couche barrière présente une épaisseur comprise entre 1 et 8 µm, notamment entre 2 et 6 µm et, en particulier, de l'ordre de 3 µm (i.e. 3 µm ± 1 µm).

Un exemple particulier de demi-cellule électrochimique selon l'invention comprend :
i) un électrolyte dense et notamment un électrolyte dense à base de zircone stabilisée à l'yttrium (YSZ) ;
ii) une couche barrière en zircone stabilisée et/ou en cérine substituée, et notamment à base de GDC ou de YDC, et déposée sur ledit électrolyte et
iii) une électrode à air telle que précédemment définie et déposée sur ladite couche barrière.

Dans cet exemple particulier, la couche barrière et l'électrode à air présentent des épaisseurs telles que précédemment définies et, en particulier, une épaisseur de l'ordre de 3 µm et de 8 µm, respectivement.

Une cellule électrochimique selon la présente invention comprend une demi-cellule électrochimique telle que précédemment définie et au moins une électrode à hydrogène ou à eau et éventuellement une (ou plusieurs) couche(s) barrière(s) séparant ladite électrode à hydrogène ou à eau de l'électrolyte.

Tout matériau habituellement utilisé comme matériau de base d'une électrode à hydrogène ou à eau est utilisable dans le cadre de la cellule électrochimique selon l'invention. L'homme du métier saura déterminer, en fonction du matériau utilisé et du matériau de l'électrolyte mis en oeuvre, si une (ou plusieurs) couche(s) barrière(s) doi(ven)t être utilisée(s) pour séparer ces deux matériaux et, dans l'affirmative, la nature du (ou des) composé(s) barrière(s) à utiliser.

La cellule électrochimique selon l'invention peut être une pile à combustibles à oxyde solide (SOFC) ou une cellule d'électrolyse à oxyde solide (SOEC). De plus, les propriétés et caractéristiques de l'électrode à air présente dans cette cellule rendent possible leur utilisation à des températures de fonctionnement inférieures à 1000°C et notamment à des températures intermédiaires telles que des températures comprises entre 700 et 800°C.

La présente invention concerne enfin un procédé de préparation d'une (demi-)cellule électrochimique selon l'invention. Un tel procédé consiste à déposer les différentes couches les unes sur les autres, le dépôt pouvant être réalisé selon l'une quelconque des techniques habituellement utilisées dans la préparation des cellules électrochimiques. A titre d'exemples particuliers de telles techniques de mise en forme des couches constituant ces cellules, on peut citer la sérigraphie, le coulage en bande, l'enduction centrifuge ou le trempage-retrait.

Dans une forme particulière de mise en oeuvre du procédé selon l'invention, le procédé selon l'invention comprend les étapes consistant à :
a) déposer, sur un électrolyte dense notamment tel que précédemment défini, un précurseur de la couche barrière ;
b) déposer, sur ledit précurseur, une encre céramique contenant du Pr₂₋ₓNiO₄ et un agent porogène telle que précédemment définie ; puis
c) soumettre l'ensemble à une étape de frittage telle que précédemment définie.

Par « précurseur de la couche barrière », on entend une composition qui, une fois soumise à l'étape de frittage (c), permettra d'obtenir une couche barrière telle que précédemment définie à savoir une couche barrière poreuse notamment en zircone stabilisée et/ou en cérine substituée, et notamment à base de GDC ou de YDC.

Le précurseur de la couche barrière est avantageusement une encre céramique comprenant de la zircone stabilisée et/ou de la cérine substituée sous forme pulvérulente, et notamment de la GDC pulvérulente ou de la YDC pulvérulente.

La poudre mise en oeuvre dans l'encre céramique utilisée pour préparer la couche barrière présente une surface spécifique, déterminée par la méthode BET (pour « Brunauer, Emett et Teller ») en utilisant le « Coulter Surface Area Analyser » de Beckman, comprise entre 5 et 20 m²/g et notamment entre 7 et 15 m²/g. Les particules constituant cette poudre ont notamment un diamètre médian (d50), déterminé en utilisant l'analyseur de taille de particules de Malvern, compris entre 0,1 et 1 µm et, en particulier, entre 0,2 et 0,7 µm. A titre d'exemple et de façon non exhaustive, la poudre de GDC utilisée dans la partie expérimentale ci-après se trouve sous la forme de particules dont le diamètre médian (d50) déterminé en utilisant l'analyseur de taille de particules de Malvern est d'environ 0,5 µm, ce qui signifie que la moitié des particules de la poudre de GDC utilisée présente un diamètre inférieur à 0,5 µm.

De plus, les particules constituant la poudre mise en oeuvre dans l'encre céramique utilisée pour préparer la couche barrière présentent un diamètre d90, déterminé en utilisant l'analyseur de taille de particules de Malvern, compris entre 0,5 et 3 µm et, en particulier, entre 1 et 2 µm. A titre d'exemple et de façon non exhaustive, la poudre de GDC utilisée dans la partie expérimentale ci-après se trouve sous la forme de particules dont le diamètre d90 déterminé en utilisant l'analyseur de taille de particules de Malvern est d'environ 1,30 µm, ce qui signifie que 90% des particules de la poudre de GDC utilisée présentent un diamètre inférieur à 1,30 µm.

Tout ce qui a été précédemment indiqué pour l'encre céramique contenant le Pr₂₋ₓNiO₄ et l'agent porogène s'applique *mutatis mutandis* à l'encre céramique utilisée pour préparer la couche barrière (notamment en termes de constituants (solvant, liant, dispersant, plastifiant) et d'étape éventuelle de dèsaération).

L'encre céramique utilisée pour préparer la couche barrière peut présenter une composition de base (solvant, liant, dispersant et/ou plastifiant) identique ou différente à l'encre céramique contenant le Pr₂₋ₓNiO₄ et l'agent porogène. Avantageusement, les deux encres céramiques ont une composition de base identique. Ainsi, l'encre céramique utilisée pour préparer la couche barrière comprend au moins un solvant et au moins un liant. En particulier, cette encre comprend du terpinéol et de l'éthylcellulose. Le rapport massique Ml/(Ml + Ms) avec Ms représentant la masse de solvant et typiquement la masse de terpinéol, et Ml la masse de liant et typiquement la masse d'éthylcellulose est comprise entre 1 et 10%, notamment entre 2 et 8% et, en particulier, entre 4 et 6%.

L'encre céramique utilisée pour préparer la couche barrière est préparée en mélangeant la zircone stabilisée et/ou la cérine substituée sous forme pulvérulente, et notamment la GDC pulvérulente ou la YDC pulvérulente avec le solvant préalablement mélangé avec au moins un élément choisi parmi un solvant, un dispersant, un liant et un plastifiant (ci-après désigné mélange 4). Le rapport M3 / (M3 + M4) avec M3 représentant la masse de la zircone stabilisée pulvérulente et/ou de la cérine substituée pulvérulente, et notamment la masse de la GDC pulvérulente ou la masse de la YDC pulvérulente, et M4 la masse du mélange 4 est compris entre 30 et 70%, notamment entre 40 et 60% et, en particulier, de l'ordre de 50% (i.e. 50% ± 5%).

Les procédés de dépôt mis en oeuvre lors des étapes (a) et (b) peuvent être identiques ou différents et choisis parmi la sérigraphie, le coulage en bande, l'enduction centrifuge ou le trempage-retrait. Avantageusement, ces deux procédés sont identiques. En particulier, ces deux dépôts sont réalisés par sérigraphie. De fait, l'encre céramique utilisée à l'étape (a) et celle utilisée à l'étape (b) peuvent être désignées sous l'expression « encre sérigraphique » ou « encre de sérigraphie ».

Une fois l'encre céramique utilisée pour préparer la couche barrière déposée à la surface de l'électrolyte et préalablement à l'étape (b) du procédé selon l'invention, cette encre peut être soumise à un séchage. La couche déposée est séchée typiquement à une température comprise entre 30 à 180°C, notamment comprise entre 70 à 160°C et, en particulier, à une température de l'ordre de 140°C (i.e. 140°C ± 10°C) et ce, pendant une durée comprise entre 3 et 45 min, notamment comprise entre 5 et 30 min et, en particulier, pendant 15 min.

De même, une fois l'encre céramique contenant le Pr₂₋ₓNiO₄ et l'agent porogène déposée à la surface de l'encre céramique utilisée pour préparer la couche barrière éventuellement séchée et préalablement à l'étape (c) du procédé selon l'invention, l'encre céramique contenant le Pr₂₋ₓNiO₄ et l'agent porogène peut être soumise à un séchage tel que défini dans le cadre du procédé de préparation de l'électrode à air.

L'étape (c) du procédé selon l'invention présente toutes les caractéristiques de l'étape de frittage telle que définie dans le cadre du procédé de préparation de l'électrode à air.

La durée, la température, la montée en température et le refroidissement lors de l'étape (c) sont tels que précédemment définis dans le cadre du procédé de préparation de l'électrode à air.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 présente des micrographies en microscopie électronique à balayage (MEB) en mode électrons secondaires de la surface de fracture d'une demi-cellule électrochimique avec une électrode à air optimisée à base de Pr₂NiO₄. La Figure 1A est une vue générale de la demi-cellule avec, de bas en haut, l'électrolyte, la couche barrière et l'électrode à air selon l'invention. La Figure 1B est une vue plus précise, centrée sur la partie supérieure de l'électrolyte (8YSZ), la couche barrière (GDC) et l'électrode à air selon l'invention (Pr₂NiO₄).
La Figure 2 présente une micrographie MEB en mode électrons secondaires de la surface d'une électrode à air optimisée à base de Pr₂NiO₄.
La Figure 3 est une représentation de Nyquist du spectre d'impédance complexe obtenue à 800°C sous air à partir de la cellule symétrique optimisée à base de Pr₂NiO4.

### EXPOSÉ DÉTAILLÉ DE MODES DE RÉALISATION PARTICULIERS

### I. Procédé de préparation selon l'invention.

### I.1. Composés de départ.

Ce procédé est basé sur :
- une poudre de départ de Pr₂NiO₄ présentant une surface spécifique de ~4,4 m²/g et répartition en tailles de particules ayant les caractéristiques suivantes : d₅₀ ~ 0,46 µm et d₉₀ ~ 0,97 µm. Cet oxyde est employé pour réaliser la couche fonctionnelle de l'électrode qui joue également le rôle de couche collectrice.
- un composé dit « barrière » à base de cérine substituée (GDC) utilisé sous forme d'un dépôt comme couche barrière afin de limiter la réactivité chimique entre le composé de la couche fonctionnelle et le matériau constituant l'électrolyte. Cette poudre présente une répartition en taille de particules telle que le d₅₀ est ~ 0,5 µm et le d₉₀ ~ 1,30 µm. Sa surface spécifique est égale à ~ 12,2 m²/g.
- de noir d'acétylène ou carbone acétylène ou encore « acétylène black », en langue anglaise, qui sert de porogène et qui présente une répartition en taille de particules centrée telle que le d₅₀ est ~ 40 nm pour une surface spécifique de 62 m²/g.

### I.2. Préparation des encres de sérigraphie.

A partir de ces composés, la mise en forme de l'électrode est basée sur la technique de dépôt par sérigraphie. L'étape suivante est donc la réalisation de deux encres de sérigraphie.

Une première encre est réalisée à partir du composé pulvérulent GDC qui est introduit à hauteur de 50% massique, dans un mélange solvant/liant lui-même composé de 95% massique de terpinéol et de 5% massique d'éthylcellulose.

Une deuxième encre est réalisée à partir d'un mélange composé de 97,5% massique de Pr₂NiO₄ et de 2,5% massique de carboné acétylène pour la partie solide qui est introduite à hauteur de 50% massique dans un mélange solvant/liant lui-même composé de 95% massique de terpinéol et de 5% massique d'éthylcellulose.

Une fois ces mélanges préparés, ils sont homogénéisés voire désaérés si besoin.

### I.3. Réalisation des dépôts par sérigraphie.

L'électrode est ensuite réalisée à la surface de l'électrolyte par dépôts au moyen d'une machine de sérigraphie.

Un premier dépôt de ~5 µm d'épaisseur est réalisé à la surface de l'électrolyte (8YSZ) à partir de l'encre de GDC. Ce dépôt est ensuite séché dans une étuve portée à 140°C pendant 15 min.

Un second dépôt à partir de l'encre contenant Pr₂NiO₄ et le porogène, de ~15 µm d'épaisseur est réalisé sur le dépôt précédent une fois celui-ci sec.

Ce dernier dépôt réalisé, un nouveau séchage en étuve à 140°C pendant 15 min est nécessaire avant le traitement de frittage partiel.

### I.4. Frittage de l'électrode.

Un ultime traitement thermique est nécessaire afin d'éliminer le porogène et de fritter partiellement l'électrode. Le frittage partiel ayant pour but de créer des ponts ou cous de frittage entre les particules de Pr₂NiO₄ tout en conservant une porosité ouverte suffisante pour laisser libre le passage des gaz.

Le traitement optimal, qui correspond à un palier de 3h à 1100°C est le suivant :
25°C - 150°C/h → 1100°C/3h - 150°C/h → 25°C

A l'issue, de ce traitement thermique, l'électrode à base Pr₂NiO₄ est prête à l'emploi.

### II. Caractérisations microstructurales de l'électrode.

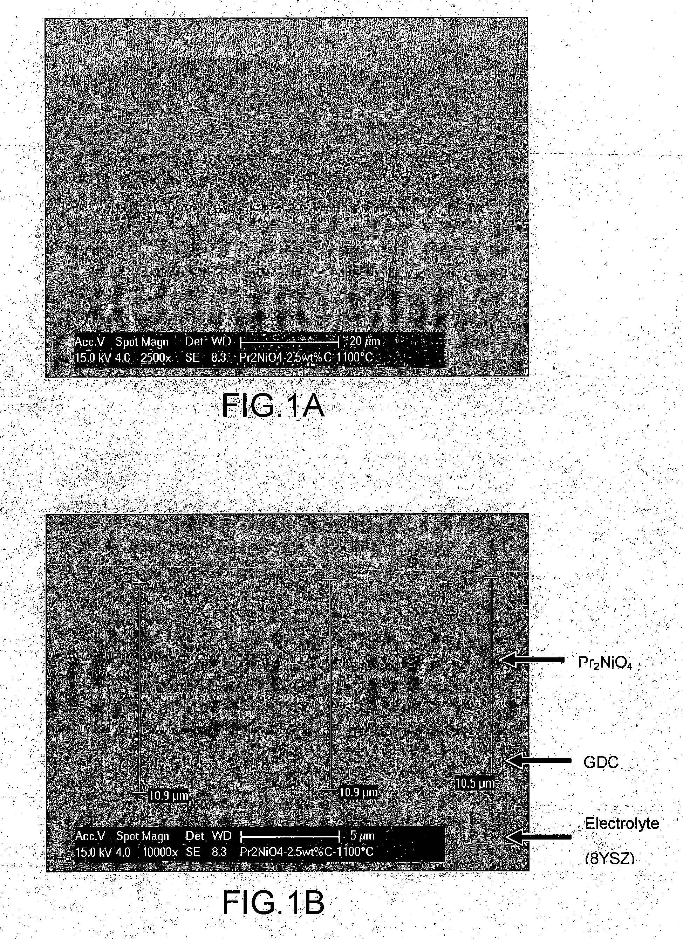

L'électrode traitée thermiquement présente une microstructure homogène comme le montre les micrographies MEB de la Figure 1.

Sur ces micrographies, il est possible de distinguer la couche de GDC à l'interface avec l'électrolyte et la couche de Pr₂NiO₄ au-dessus (Figure 1B).

La couche de GDC présente une épaisseur d'environ 3 µm tandis que la couche de Pr₂NiO₄ présente une épaisseur d'environ 8 µm. Ces deux couches sont poreuses et les particules qui les constituent, en raison du frittage partiel, ont sensiblement gardé leur taille initiale.

La porosité ouverte de la couche de Pr₂NiO₄ représente ~50% de son volume.

L'observation de la surface de l'électrode par MEB met également en valeur cette homogénéité microstructurale tant en termes de porosité que de taille de particules (Figure 2).

### III. Caractérisations électrochimiques de l'électrode.

A partir de ces optimisations, des cellules symétriques électrode//électrolyte//électrode ont été préparées et testées par spectroscopie d'impédance complexe sous air à 800°C.

Les résultats obtenus sont présentés sur le spectre de la Figure 3. A partir de ce spectre, il est possible de déterminer une résistance de polarisation de ~0,013 Ω.cm² à 800°C sous air, soit une valeur ~4,6 fois inférieure à celle présentée dans la littérature [2]. Ce résultat mettant en évidence l'importance de l'optimisation microstructurale définie ici. Les valeurs de résistance de polarisation sous air ont été mesurées à différentes températures ; ses valeurs sont récapitulées dans le Tableau 1.

**Tableau 1 : valeurs de résistances de polarisations (Rp) pour une électrode optimisée à base de Pr₂NiO₄ à différentes températures.**

| T (°C) | Rp (Ω.cm²) | 1000/T (K) |
|---|---|---|
| 700 | 0,037 | 1,02775 |
| 750 | 0,022 | 0,97752 |
| 800 | 0, 013 | 0,93197 |

### REFERENCES

[1] Skinner et Kilner, 2000, « Oxygen diffusion and surface exchange in La2-xSrxNiO4+d », Solid State Ionics, vol. 135, pages 709-712.
[2] Mawdsley et al., 2007, Electrode Materials Development for High Temperature Steam Electrolysis, Abstract n°334, 211th ECS Meeting transaction.
[3] Kim et al., 2001, « Characterization of LSM-YSZ composite électrode by ac impedance spectroscopy », Solid State Ionics, vol. 143, pages 379-389.
[4] Taillades et al., 2010, « Intermediate temperature anode-supported fuel cell based on BaCe0.9Y0.1O3 electrolyte with novel Pr2NiO4 cathode », Fuel Cells, vol. 1, pages 166-173.
[5] Meng et al., 2008, « Characterization of Pr1-xSrxCo0.8Fe0.2O3-δ (0.2≤x≤0.6) cathode materials for intermediate temperature solide oxide fuel cells », Journal of Power Sources, vol. 183, pages 581-585.

## Revendications

1. Procédé de préparation d'une électrode à air à base de Pr₂₋ₓNiO₄ avec 0 ≤ x < 2, comprenant une étape consistant à soumettre une encre céramique comprenant du Pr₂₋ₓNiO₄ et un agent porogène, à un frittage à une température supérieure à 1000°C et inférieure ou égale à 1150°C.

2. Procédé selon la revendication 1, **caractérisé en ce que** la quantité de poudre de Pr₂₋ₓNiO₄ avec x tel que défini à la revendication 1, exprimée en masse par rapport à la masse totale de ladite encre est comprise entre 30 et 70%, notamment entre 40 et 60% et avantageusement de l'ordre de 48%.

3. Procédé selon la revendication 1 ou 2, **caractérisé en ce que** ledit agent porogène se présente sous forme d'une poudre dont les particules ont un diamètre médian (d50), déterminé en utilisant l'analyseur de taille de particules de Malvern, inférieur à 4 µm.

4. Procédé selon l'une quelconque des revendications précédentes, **caractérisé en ce que** ledit agent porogène est choisi parmi le noir d'acétylène, le polystyrène, un polyméthacrylate de méthyle (PMMA), l'amidon, un polyéthylène, une cyclodextrine, une cire, un monosaccharide, un oligosaccharide et un polysaccharide.

5. Procédé selon l'une quelconque des revendications précédentes, **caractérisé en ce que** le rapport massique Mp/(Mc + Mp) avec Mp représentant la masse d'agent porogène et Mc la masse de Pr₂₋ₓNiO₄ avec x tel que défini à la revendication 1 est compris entre 1,5 et 10%, notamment entre 2 et 7,5% et, en particulier, entre 2,5 et 5%.

6. Procédé selon l'une quelconque des revendications précédentes, **caractérisé en ce que** ladite encre céramique comprend au moins un solvant comme du terpinéol et au moins un liant comme de l'éthylcellulose et **en ce que** le rapport massique Ml/(Ml + Ms) avec Ms représentant la masse de solvant et Ml la masse de liant est compris entre 1 et 10%, notamment entre 2 et 8% et, en particulier, entre 4 et 6%.

7. Procédé selon l'une quelconque des revendications précédentes, **caractérisé en ce que** ladite encre céramique est soumise à la température de frittage pendant une durée comprise entre 1 et 5 h, notamment entre 2 et 4 h et, en particulier, pendant une durée de l'ordre de 3 h.

8. Procédé selon l'une quelconque des revendications précédentes, **caractérisé en ce que**, préalablement à l'étape de frittage, ladite encre céramique est portée à la température de frittage au moyen d'une rampe de montée en température comprise entre 50 et 400°C/h, notamment entre 100 et 200°C/h et, en particulier, de l'ordre de 150°C/h.

9. Procédé selon l'une quelconque des revendications précédentes, **caractérisé en ce que**, suite à l'étape de frittage, ladite encre céramique est ramenée à une température comprise entre 10 et 40°C, notamment entre 18 et 30°C et avantageusement à température ambiante, la couche étant portée de la température de frittage à cette température au moyen d'une rampe de refroidissement comprise entre 50 et 400°C/h, notamment entre 100 et 200°C/h et, en particulier, de l'ordre de 150°C/h.

10. Electrode à air à base de Pr₂₋ₓNiO₄ avec 0 ≤ x < 2, obtenue par frittage, à une température supérieure à 1000°C et inférieure ou égale à 1150°C, d'une encre céramique comprenant du Pr₂₋ₓNiO₄ et un porogène, susceptible d'être préparée par un procédé tel que défini à l'une quelconque des revendications précédentes, **caractérisée en ce qu'**elle présente une résistance de polarisation inférieure à 0,06 Ω.cm² à 800°C sous air, notamment inférieure à 0,045 Ω.cm² à 800°C sous air et, en particulier, inférieure à 0,02 Ω.cm² à 800°C sous air.

11. Electrode à air selon la revendication 10, **caractérisée en ce qu'**elle présente une porosité ouverte comprise entre 30 et 70%, notamment entre 40 et 60% et, en particulier, de l'ordre de 50%, le pourcentage étant exprimé en volume par rapport au volume total de l'électrode à air.

12. Demi-cellule électrochimique comprenant une électrode à air telle que définie à la revendication 10 ou 11 ou susceptible d'être préparée selon un procédé tel que défini à l'une quelconque des revendications 1 à 9.

13. Demi-cellule électrochimique selon la revendication 12, **caractérisée en ce qu'**elle comprend :
i) un électrolyte dense et notamment un électrolyte dense à base de zirconium stabilisé à l'yttrium (YSZ) ;
ii) une couche barrière en zircone stabilisée et/ou en cérine substituée, et notamment à base de GDC ou de YDC, et déposée sur ledit électrolyte et
iii) une électrode à air telle que précédemment définie et déposée sur ladite couche barrière.

14. Cellule électrochimique, **caractérisée en ce qu'**elle comprend une demi-cellule électrochimique telle que définie à la revendication 12 ou 13 et au moins une électrode à hydrogène ou à eau et éventuellement une ou plusieurs couche(s) barrière(s) séparant ladite électrode à hydrogène ou à eau de l'électrolyte.

15. Procédé de préparation d'une demi-cellule électrochimique telle que définie à la revendication 12 ou 13, **caractérisé en ce qu'**il comprend les étapes consistant à :
a) déposer, sur un électrolyte dense, un précurseur d'une couche barrière ;
b) déposer, sur ledit précurseur, une encre céramique telle que définie à l'une quelconque des revendications 1 à 6 ; puis
c) soumettre l'ensemble à une étape de frittage telle que définie à l'une quelconque des revendications 1 et 7 à 9.

## Patentansprüche

1. Verfahren zur Herstellung einer Luftelektrode auf Basis von Pr₂₋ₓNiO₄ mit 0 ≤ *x* < 2, umfassend einen Schritt, der darin besteht, eine keramische Tinte, welche *Pr₂₋ₓNiO₄* und ein porogenes Agens enthält, einer Sinterung bei einer Temperatur größer als 1000°C und kleiner oder gleich 1150°C zu unterziehen.

2. Verfahren nach Anspruch 1, **dadurch gekennzeichnet, dass** die Menge des Pulvers von *Pr₂₋ₓNiO₄* mit *x* wie in Anspruch 1 definiert, ausgedrückt als Masse bezogen auf die gesamte Masse der Tinte, zwischen 30 und 70 % enthalten ist, insbesondere zwischen 40 und 60 %, und vorzugsweise in der Größenordnung von 48 %.

3. Verfahren nach Anspruch 1 oder 2, **dadurch gekennzeichnet, dass** das porogene Agens die Form eines Pulvers aufweist, dessen Partikel einen Mediandurchmesser (d50) kleiner als 4 µm haben, bestimmt unter Verwendung eines Partikelgrößenanalysators von Malvern.

4. Verfahren nach einem der vorhergehenden Ansprüche, **dadurch gekennzeichnet, dass** das porogene Agens ausgewählt ist aus Acetylenschwarz, Polystyrol, einem Methyl-Polymethacrylat (PMMA), Amidon, einem Polyethylen, einem Cyclodextrin, einer Stearinsäure, einem Monosaccharid, einem Oligosaccharid und einem Polysaccharid.

5. Verfahren nach einem der vorhergehenden Ansprüche, **dadurch gekennzeichnet, dass** das Massenverhältnis *Mp*/(*Mc* + *Mp*), wobei Mp die Masse des porogenen Agens darstellt und *Mc* die Masse von *Pr₂₋ₓNiO₄* darstellt, mit *x* wie in Anspruch 1 definiert, zwischen 1,5 und 10 % enthalten ist, insbesondere zwischen 2 und 7,5 %, und weiter insbesondere zwischen 2,5 und 5 %.

6. Verfahren nach einem der vorhergehenden Ansprüche, **dadurch gekennzeichnet, dass** die keramische Tinte wenigstens ein Lösungsmittel wie Terpineol umfasst, und wenigstens einen Binder wie Ethylcellulose, und dass das Massenverhältnis *Ml*/(*Ml* + *Ms*), wobei *Ms* die Masse des Lösungsmittels darstellt und *Ml* die Masse des Binders, zwischen 1 und 10 % enthalten ist, insbesondere zwischen 2 und 8 %, und weiter insbesondere zwischen 4 und 6 %.

7. Verfahren nach einem der vorhergehenden Ansprüche, **dadurch gekennzeichnet, dass** die keramische Tinte der Sinterungstemperatur während einer Dauer ausgesetzt wird, die zwischen 1 und 5 h enthalten ist, insbesondere zwischen 2 und 4 h, und weiter insbesondere während einer Dauer einer Größenordnung von 3 h.

8. Verfahren nach einem der vorhergehenden Ansprüche, **dadurch gekennzeichnet, dass** vor dem Schritt der Sinterung die keramische Tinte auf die Sinterungstemperatur mit Hilfe einer Temperaturanstiegsrampe gebracht wird, die zwischen 50 und 400°C/h enthalten ist, insbesondere zwischen 100 und 200°C/h, und weiter insbesondere in der Größenordnung von 150°C/h.

9. Verfahren nach einem der vorhergehenden Ansprüche, **dadurch gekennzeichnet, dass** im Anschluss an den Schritt der Sinterung die keramische Tinte auf eine Temperatur zurückgebracht wird, die zwischen 10 und 40°C enthalten ist, insbesondere zwischen 18 und 30°C und vorzugsweise auf die Umgebungstemperatur, wobei die Schicht von der Sinterungstemperatur auf diese Temperatur mit Hilfe einer Kühlungsrampe gebracht wird, die zwischen 50 und 400°C/h enthalten ist, insbesondere zwischen 100 und 200°C/h, und weiter insbesondere in der Größenordnung von 150°C/h.

10. Luftelektrode auf Basis von *Pr*₂₋*ₓNiO*₄ mit 0 ≤ *x* < 2, die erhalten ist durch Sinterung, bei einer Temperatur größer als 1000°C und kleiner oder gleich 1150°C, einer keramischen Tinte, die *Pr₂₋ₓNiO₄* und ein Porogen enthält, die dazu ausgelegt ist, durch ein Verfahren wie in einem der vorhergehenden Ansprüche definiert hergestellt zu werden, **dadurch gekennzeichnet, dass** sie einen Polarisationswiderstand kleiner als 0,06 Ω.*cm*² bei 800°C an Luft aufweist, insbesondere kleiner als 0,045 Ω.*cm*² bei 800°C an Luft, und weiter insbesondere kleiner als 0,02 Ω.*cm*² bei 800°C an Luft.

11. Luftelektrode nach Anspruch 10, **dadurch gekennzeichnet, dass** sie eine offene Porosität aufweist, die zwischen 30 und 70 % enthalten ist, insbesondere zwischen 40 und 60 %, und weiter insbesondere in der Größenordnung von 50 %, wobei der Prozentsatz ausgedrückt ist als Volumen bezogen auf das gesamte Volumen der Luftelektrode.

12. Elektrochemische Halbzelle, umfassend eine Luftelektrode wie in Anspruch 10 oder 11 definiert, oder die dazu ausgelegt ist, gemäß einem Verfahren wie in einem der Ansprüche 1 bis 9 definiert hergestellt zu werden.

13. Elektrochemische Halbzelle nach Anspruch 12, **dadurch gekennzeichnet, dass** sie umfasst:
i) Einen dichten Elektrolyten, und insbesondere einen dichten Elektrolyten auf Basis von Zirkon, stabilisiert mit Yttrium (YSZ);
ii) Eine Barriereschicht aus stabilisiertem Zirkon und/oder aus substituiertem Cerin, und insbesondere auf Basis von GDC oder von YDC, und die auf dem Elektrolyten aufgebracht ist, und
iii) Eine Luftelektrode wie oben definiert, die auf die Barriereschicht aufgebracht ist.

14. Elektrochemische Zelle, **dadurch gekennzeichnet, dass** sie eine elektrochemische Halbzelle wie in Anspruch 12 oder 13 definiert sowie wenigstens eine Wasserstoff oder Wasserelektrode umfasst und gegebenenfalls eine oder mehrere Barriereschicht(en), die die Wasserstoff- oder Wasserelektrode von dem Elektrolyten trennt/trennen.

15. Verfahren zur Herstellung einer elektrochemischen Halbzelle wie in Anspruch 12 oder 13 definiert, **dadurch gekennzeichnet, dass** es die folgenden Schritte umfasst:
a) Aufbringen eines Vorläufers einer Barriereschicht auf einem dichten Elektrolyten;
b) Aufbringen einer keramischen Tinte wie in einem der Ansprüche 1 bis 6 definiert auf dem Vorläufer; und anschließend
c) Durchführen eines Sinterungsschritts wie in einem der Ansprüche 1 und 7 bis 9 definiert an der Gesamtanordnung.

## Claims

1. Method for preparing an air electrode based on Pr₂₋ₓNiO₄ with 0≤x<2, comprising a step consisting in sintering a ceramic ink comprising Pr₂₋ₓNiO₄ and a pore-forming agent at a temperature above 1000°C and below or equal to 1150°C.

2. Method according to claim 1, **characterised in that** the quantity of Pr₂₋ₓNiO₄ powder where x is as defined in claim 1, expressed by mass relative to the total mass of said ink is comprised between 30 and 70%, particularly between 40 and 60% and advantageously of around 48%.

3. Method according to claim 1 or 2, **characterised in that** said pore-forming agent is in the form of a powder the particles of which have a median diameter (d50), determined using the Malvern particle size analyser, below 4 µm.

4. Method according to any one of the previous claims, **characterised in that** said pore-forming agent is chosen from among acetylene black, polystyrene, polymethyl methacrylate (PMMA), starch, polyethylene, cyclodextrin, wax, monosaccharide, oligosaccharide and polysaccharide.

5. Method according to any one of the previous claims, **characterised in that** the mass ratio Mp/(Mc + Mp) where Mp is the mass of pore-forming agent and Mc is the mass of Pr₂₋ₓNiO₄ where x is as defined in claim 1 is between 1.5 and 10%, particularly between 2 and 7.5% and in particular, between 2.5 and 5%.

6. Method according to any one of the previous claims, **characterised in that** said ceramic ink comprises at least one solvent such as terpineol and at least one binder such as ethylcellulose and **in that** the mass ratio Ml/(Ml + Ms) where Ms is the mass of solvent and Ml is the mass of binder, is between 1 and 10%, particularly between 2 and 8% and in particular, between 4 and 6%.

7. Method according to any one of the previous claims, **characterised in that** said ceramic ink is subjected to the sintering temperature for a duration of between 1 and 5 h, particularly between 2 and 4 h and in particular, for a duration of around 3 h.

8. Method according to any one of the previous claims, **characterised in that**, before the sintering step, said ceramic ink is increased to the sintering temperature following a temperature rise gradient of between 50 and 400°C/h, particularly between 100 and 200°C/h and in particular, of around 150°C/h.

9. Method according to any one of the previous claims, **characterised in that**, subsequent to the sintering step, said ceramic ink is brought to a temperature of between 10 and 40°C, particularly between 18 and 30°C and advantageously at ambient temperature, the layer being brought from the sintering temperature to the cooled temperature along a cooling gradient of between 50 and 400°C/h, particularly between 100 and 200°C/h and in particular, of around 150°C/h.

10. Air electrode based on Pr₂₋ₓNiO₄ where 0 ≤ x < 2, obtained by sintering a ceramic ink containing Pr₂₋ₓNiO₄ and a pore-forming agent at a temperature above 1000°C and below or equal to 1150°C, that can be prepared using a method as defined in any one of the previous claims, **characterised in that** it has a polarisation resistance below 0.06 Ω.cm² at 800°C in air, particularly below 0.045 Ω.cm² at 800°C in air and in particular, below 0.02 Ω.cm² at 800°C in air.

11. Air electrode according to claim 10, **characterised in that** it has an open porosity between 30 and 70%, particularly between 40 and 60% and in particular, of around 50%, the percentage being expressed as a volume relative to the total volume of the air electrode.

12. Electrochemical half-cell comprising an air electrode as defined in claim 10 or 11, or that may be prepared according to a method as defined in any one of claims 1 to 9.

13. Electrochemical half-cell according to claim 12, **characterised in that** it comprises:
i) a dense electrolyte and particularly a dense Yttrium Stabilized Zirconia (YSZ) electrolyte;
ii) a barrier layer made from stabilised zirconia and/or from doped ceria, particularly based on GDC or YDC, and deposited on said electrolyte and
iii) an air electrode as defined above and deposited on said barrier layer.

14. Electrochemical cell, **characterised in that** it comprises an electrochemical half-cell as defined in claim 12 or 13 and at least one hydrogen or water electrode and possibly one or several barrier layer(s) separating said hydrogen or water electrode from the electrolyte.

15. Method for preparing an electrochemical half-cell as defined in claim 12 or 13, **characterised in that** it comprises steps consisting in:
a) depositing a precursor of a barrier layer on a dense electrolyte;
b) depositing a ceramic ink as defined in any one of claims 1 to 6, on said precursor; and then
c) applying a sintering step as defined in any one of claims 1 and 7 to 9, to the assembly.
